Europäisches Patentamt

European Patent Office

Office européen des brevets

(19)

(11) Publication number: **0 141 676**
A2

(12) **EUROPEAN PATENT APPLICATION**

(21) Application number: 84307676.1

(22) Date of filing: 07.11.84

(51) Int. Cl.⁴: **B 60 K 41/02**

(30) Priority: **08.11.83 GB 8329735**

(43) Date of publication of application: **15.05.85**
**Bulletin 85/20**

(84) Designated Contracting States: **BE DE FR GB IT NL SE**

(71) Applicant: **Self-Changing Gears Limited, Lythalls Lane, Coventry Warwickshire (GB)**

(72) Inventor: **Willetts, Harry, 4B Kersley Brook Road, Coventry (GB)**

(74) Representative: **Rock, Olaf Colin et al, LRL Patent Trademark and Licensing Dept. Cowley Body Plant, Cowley Oxford OX4 5NL (GB)**

(54) **Power drive system.**

(57) A power drive system for controlling the transmission of power from a prime mover such as a diesel engine (40) to a load such as the epicyclic transmission (50) of a track-laying vehicle comprises an hydraulically operable multiple dry-plate clutch (20), an electro-hydraulic valve (64) connected to operate the clutch, and a microprocessor control system (60). The microprocessor responds to the throttle setting by means of two L.V.D.T. sensors (61, 62), and to the differential clutch speed by two speed sensors (66, 67) and controls a fuel pump (41) by a stepper motor (42).

During power take-up, the fuel pump is set to give maximum engine torque irrespective of throttle setting, and the microprocessor (60) causes the valve (64) to provide a pulse-width-modulated regular series of clutch-actuating pressure pulses having a predetermined frequency, the pulses causing the clutch to alternate at that frequency between zero and a predetermined maximum applying force, the pulse width variable, in response to the throttle setting, between 0 % and 100 % of the period corresponding to the said frequency.

If the clutch fails to lock after a predetermined time, the power take-up procedure is recommenced. If the clutch does lock, the pulse width is set at 100 % and fuel pump control reverts to correspondence with throttle demand.

## POWER DRIVE SYSTEM

This invention relates to a system for controlled power transmission between a prime mover, such as a vehicle engine, and a load, such as a vehicle gearbox, and in particular to a system including a clutch and a clutch control regulating the clutch engagement.

A modern turbo-charged diesel engine has a torque characteristic which inhibits the efficient use of a hydro-kinetic or a centrifugally-controlled power take-up device. It is an object of the invention to provide a system capable of taking up the drive in a manner compatible with the diesel engine output, and in a more efficient manner.

Mechanical type clutches using a plurality of interleaved dry plates, hereinafter referred to as dry-plate clutches, are known in the art, and the invention lies in the design of a dry-plate clutch and its associated control system for the present purpose, and in a method of operating such a clutch.

The invention consists in a power drive system for controlling the transmission of power from a prime mover to a load, comprising an hydraulically operable multiple dry-plate clutch connectable in operation between the prime mover and the load, electro-hydraulic valve means connected to operate the clutch, and an electronic control system, responsive to a control signal representative of the degree of clutch slip, to cause the valve means to apply a pulse-width-modulated regular series of pressure pulses having a predetermined frequency, the pulses causing the clutch to alternate at that frequency between zero and a predetermined maximum applying force, the pulse width being set by the control system and variable, in response to the control signal, between 0% and 100% of the period corresponding to the said frequency.

In the preferred system the clutch has a plurality of interleaved driving and driven plates, on to one of each pair of the opposing faces of which is bonded a plurality of friction segments, which are preferably of sintered bronze and/or ceramic material.

A motor vehicle in accordance with the invention comprises a power drive system of the type described above, the clutch being connected between the vehicle engine and the vehicle transmission, and further comprises a throttle control, the control system responding to the throttle setting and to the differential rotational speed of clutch input and output shafts to set the said pulse width accordingly.

A method in accordance with the invention of controlling a multiple dry-plate clutch connected to control power transmission from a prime mover to a load, comprises the step of applying to a plurality of hydraulic cylinders within the clutch a pulse-width-modulated regular series of pressure pulses having a predetermined frequency, the pulses causing the clutch to alternate at that frequency between zero and a predetermined maximum applying force, the pulse width being set by the control system and variable, in response to the control signal, between 0% and 100% of the period corresponding to the said frequency.

The use of a completely dry clutch, in accordance with the invention, operated between zero and maximum actuating pressure and nothing in between, ensures firstly that there is very little parasitic drag, secondly that there is no change in the operational characteristics due to oil drag or to coating of the friction elements by deposits of carbonized matter from the oil, and thirdly that the actuation of the clutch is capable of very precise control by the on/off modulation of the hydraulic pressure.

Whilst the invention may be used in a variety of applications it is particularly useful when employed in conjunction with an epicyclic gear type transmission such as that used in a track-laying vehicle.

In order that the invention may be better understood, a preferred embodiment will now be described with reference to the accompanying drawings, wherein:-

Figure 1 is a schematic diagram of part of a vehicle embodying the present invention;

Figure 2 is a cross-sectional diagram of a dry-plate clutch embodying the present invention, and includes an outline showing a vehicle gearbox to which the clutch is attached;

Figure 3 is a broken-away perspective view of part of the clutch of Figure 2; and

Figure 4 is a view of one of the plates of the clutch of Figures 2 and 3.

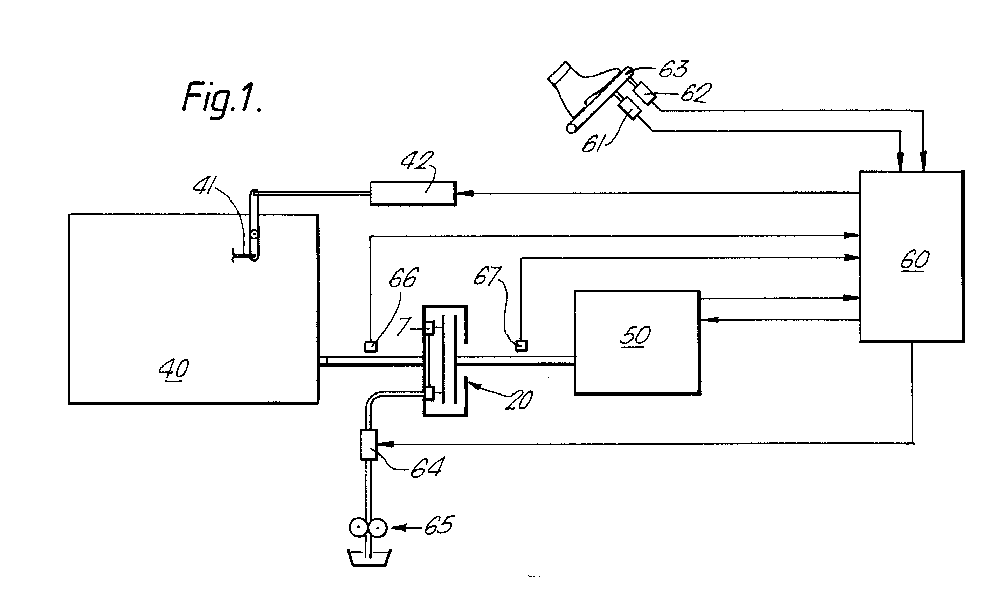

With reference to Figure 1, a vehicle such as a track-laying vehicle, in accordance with a preferred embodiment of the invention, has as its prime mover a diesel engine 40. The power from the engine 40 is transmitted via a multiple dry-plate clutch 20 to a load in the form of an epicyclic change gear unit 50. A plurality of hydraulic cylinders 7 apply a compressive force to the interleaved driving and driven clutch plates when their hydraulic fluid is compressed by a pump 65 through an electro-hydraulic control valve 64.

Overall control of clutch engagement and other functions is provided by a microprocessor unit 60. A foot throttle pedal 63 has two linear variable differential transformers 61, 62 which provide the microprocessor 60 with a precise indication of throttle demand. A fuel injection pump 41 for the engine 40 is controlled by a stepper motor 42 which responds to a signal from the microprocessor as described below. Two sensors 66, 67 adjacent input and output clutch shafts respectively provide to the microprocessor 60 information from which the differential rotational shaft speed, i.e. the degree of clutch slip, is calculated.

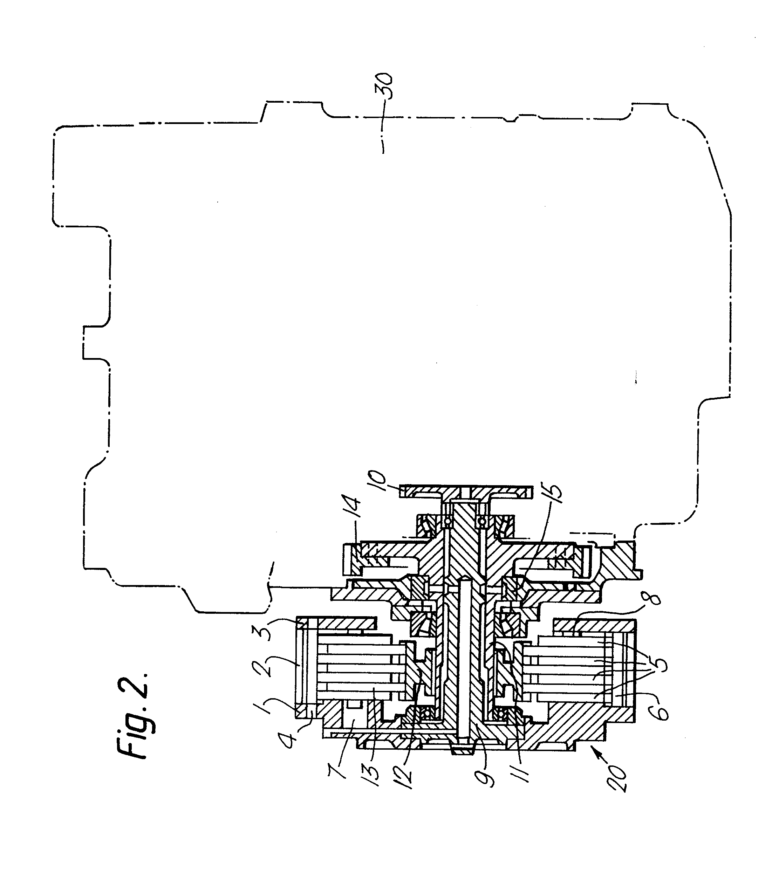

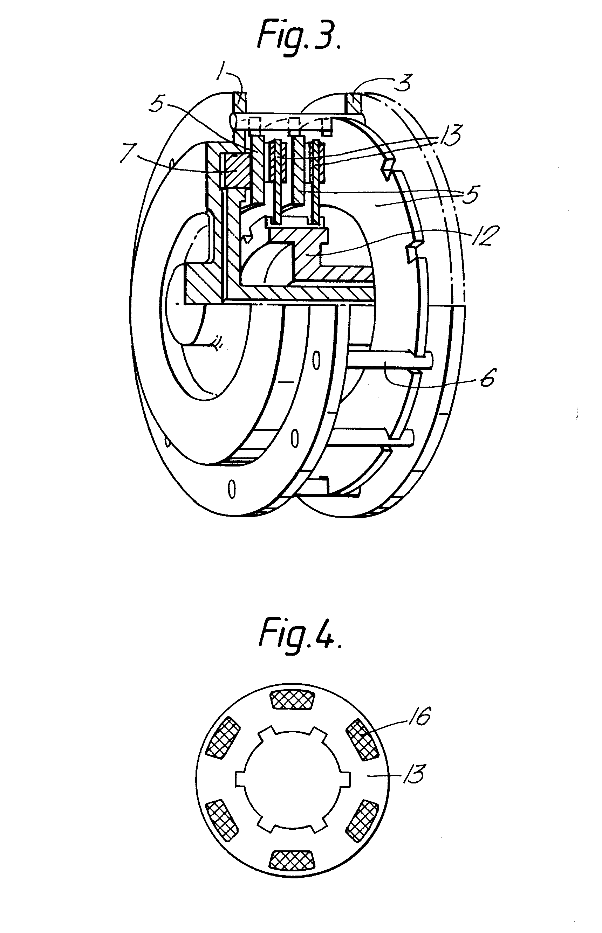

Before describing the operation of the system, the structure of the clutch will be described in greater detail, with reference to Figures 2, 3 and 4.

The body of the clutch consists of an input driving plate having a flange 1, an annular ring 2, and a closure plate 3, these three items being secured by bolts 4 placed around the periphery. Four driving plates 5 are located within the clutch body by slots around their periphery engaging with pins 6. The input driving plate is provided with six hydraulic cylinders 7 equally spaced around the plate. Several cylinders are considered preferable to a single large diameter cylinder because of the lower frictional resistance of their piston seals and also because they avoid the problem of "tipping" which can occur with large annular pistons. The piston of each cylinder forces against the driving plate 5 nearest the input driving plate, and tends to compress all the plates together. The closure plate 3, against which the pistons force the plates, has six circular discs 8 opposite respective cylinders, to take the reaction force. These discs 8 are of a thermally insulating material. A shaft 9 extending through the centre of the clutch has an integral flange bolted to the input driving plate, and provides drive via gear 10 to the pressure and lubricating oil pump 65 (shown in Figure 1 but not Figures 2-4).

A clutch output shaft 11 carries a splined hub 12 on which the clutch driven plates 13 are located. The hub 12 drives the gear ratio change assembly, within the gearbox 30, by means of a gear 14 mounted on a flange integral with shaft 11. Each driven plate 13 (Figure 4) has mating splines which slide freely along the hub, and consists of a steel disc with six (in this example) friction elements 16 bonded to it on both sides. (In an alternative construction, the friction segments 16 are bonded instead to the driving plates 5.) The friction elements 16 are of any material capable of withstanding the high pressures and temperatures involved and not breaking down or developing "glazed" surfaces; preferred materials are sintered bronze or ceramic material, or a combination of both.

In this example, there are four driving plates and three driven plates, but any number may be employed, the total number of plates being at least three to provide the interleaving.

Pressurised oil from the valve 64 (not shown in Figure 2) is fed to a muff 15 surrounding the shaft 11 and transferred via the inner shaft 9 to the cylinders 7. In this way, the clutch is actuated by the cylinders on command from the microprocessor unit 60.

Heat generated during the slipping of the clutch is dispersed by an air circulation induced centrifugally by the clutch components.

The control system works as follows. The system firstly controls the take-up sequence of power during clutch slippage, and then controls the lock-up of the clutch.

The take-up sequence is initiated whenever an increase in load or demand dictates that clutch slippage is necessary to maintain engine power. The initial movement of the throttle pedal 63 causes the microprocessor to signal the stepper motor 42 to set the fuel injection pump 41 to the position which delivers maximum torque. Thereafter the throttle pedal controls the pulse width of a regular series of constant frequency pressure pulses applied to actuate the clutch, each pulse consisting of a cyclic switch between maximum and zero pressure. The pulse width is variable between 0% of the period of one cycle (i.e. zero pressure all the time) to 100% of the period (i.e. maximum pressure continuously); at intermediate pulse widths, the pressure alternates between zero and maximum. The frequency of this modulation is not critical, but it is conveniently at around 10 cycles per second. Throughout this period of take-up, the fuel injection pump 41 is set to generate maximum engine torque, irrespective of the throttle setting.

The application of pressure is timed by the microprocessor 60, and is monitored against the differential clutch speed as measured by the sensors 66, 67. When the clutch stops slipping, i.e. the differential speed reaches zero, the pulse width is instantly increased to 100%, thus locking the clutch. If however the clutch is still slipping after a predetermined time, governed by the coefficient of friction of the friction material, the engine power is cut back by stepper motor 42, and the speed falls to tick-over. The stepper motor 42 is capable of both opening and closing to predetermined levels. The process to start the vehicle is then recommenced.

When power has been taken up and the clutch locked, control of the fuel pump is restored to the throttle pedal 63.

The "bangdown" reaction of the throttle pedal of a track-laying vehicle, accepted as normal with prior systems incorporating centrifugal clutches, is unnecessary with systems using the present invention. The reaction required instead is more closely related to normal truck driving technique, i.e. a controlled throttle application. The delay associated with centrifugal clutch take-up is replaced by a controlled (time-averaged) pressure build-up.

0141676

CLAIMS

1. A power drive system for controlling the transmission of power from a prime mover to a load, comprising an hydraulically operable multiple dry-plate clutch connectable in operation between the prime mover and the load, electro-hydraulic valve means connected to operate the clutch, and an electronic control system, responsive to a control signal representative of the degree of clutch slip, to cause the valve means to apply a pulse-width-modulated regular series of pressure pulses having a predetermined frequency, the pulses causing the clutch to alternate at that frequency between zero and a predetermined maximum applying force, the pulse width being set by the control system and variable, in response to the control signal, between 0% and 100% of the period corresponding to the said frequency.

2. A power drive system in accordance with Claim 1, wherein the clutch has a plurality of interleaved driving and driven plates, on to one of each pair of the opposing faces of which is bonded a plurality of friction segments.

3. A power drive system in accordance with Claim 2, wherein the friction segments are sintered bronze and/or ceramic material.

4. A power drive system in accordance with Claim 1,2 or 3, wherein the clutch comprises a casing attached rigidly to an input shaft adapted· for connection to the prime mover, the casing also attached to a set of driving plates within the casing, a set of driven plates interleaved with the driving plates and rigidly attached to an output shaft adapted for connection to the load, and a plurality of hydraulic cylinders arranged within the casing when pressurised hydraulically to force the plates into frictional engagement.

5. A power drive system in accordance with Claim 4, wherein the input shaft drives an hydraulic fluid pump connected to provide the said hydraulic pressure to the cylinders.

6. A power drive system in accordance with any of Claims 1 to 5, wherein the control system comprises sensor means detecting the relative rotational speeds of the input and output clutch shafts, and a microprocessor responsive to a signal from the speed sensor representative of the differential speed to determine the said pulse width as a function of time.

7. A motor vehicle comprising a power drive system in accordance with any preceding claim, the clutch being connected between the vehicle engine and the vehicle transmission, and further comprising a throttle control, the control system responding to the throttle setting and to the differential rotational speed of clutch input and output shafts to set the said pulse width accordingly.

8. A vehicle in accordance with Claim 7, comprising a fuel pump and means for controlling the rate of flow of the fuel pump, the control system providing a signal to the fuel pump control means to vary the flow rate in correspondence with throttle demand when the clutch is locked, but independently of the throttle such as to give maximum prime mover torque during the period that there is some clutch slip.

9. A method of controlling a multiple dry-plate clutch connected to control power transmission from a prime mover to a load, by applying to a plurality of hydraulic cylinders within the clutch a pulse-width-modulated regular series of pressure pulses having a predetermined frequency, the pulses causing the clutch to alternate at that frequency between zero and a predetermined maximum applying force, the pulse width being set by the control system and variable, in response to the control signal, between 0% and 100% of the period corresponding to the said frequency.

10. A method in accordance with Claim 9, including the steps of detecting the differential rotational speeds of input and output clutch shafts by means of a sensor, and varying the said pule width accordingly.

11. A method in accordance with Claim 10, including the step of detecting the setting of a throttle controlling the demand on the load, and varying the said pulse width accordingly.

12. A method in accordance with Claim 9, 10 or 11, of controlling the clutch in the event that clutch slippage is required, comprising the steps of:-

(i) causing the prime mover to develop maximum torque;

(ii) varying the said pulse width between 0% and 100% in correspondence with throttle demand, and simultaneously monitoring the differential clutch speed;

(iii) in the event that the differential speed reaches zero within a predetermined period from the start, switching instantly to 100% pulse width; and

(iv) in the event that the differential speed does not reach zero within the predetermined time, so that the clutch still slips, reducing the pulse width to 0% and recommencing the method at step (ii).

13. A method in accordance with Claim 12, comprising the step of controlling the setting of a fuel pump supplying fuel to the prime mover such that the prime mover develops its said maximum torque throughout the period of clutch slippage, but such that the fuel pump setting corresponds directly to the throttle setting when the clutch is locked.

Fig.1.

1/3

0141676

Fig.2.

0141676

# Fig. 3.

# Fig. 4.